# EUROPEAN PATENT SPECIFICATION

(11) **EP 3 560 791 B1**
(45) Date of publication and mention of the grant of the patent: **29.07.2020**
(21) Application number: 18169866.3
(22) Date of filing: 27.04.2018
(51) Int. Cl.: B61H 5/00, F16D 55/224, F16D 65/56, F16D 121/02, F16D 121/12, F16D 125/66, F16D 125/64

(54) **A COMPACT BRAKE ACTUATOR FOR RAILWAY VEHICLES**
KOMPAKTER BREMSAKTUATOR FÜR SCHIENENFAHRZEUGE
ACTIONNEUR DE FREIN COMPACT POUR VÉHICULES FERROVIAIRES

(43) Date of publication of application: 30.10.2019
(73) Proprietor: Jiangxi Huawu Brake Co., Ltd., Fengcheng City Jiangxi Province (CN)
(72) Inventor: Barberis, Dario, Fengcheng City, Jiangxi Province (CN); Xie, Xuzhou, Fengcheng City, Jiangxi Province (CN)
(74) Representative: Marchitelli, Mauro

(56) References cited:
- EP-A2- 0 261 903
- WO-A2-2008/015569
- US-A- 2 064 575

## Description

The present invention relates to disc brakes for railway vehicles and relates to a compact brake actuator, configured to apply a braking force to two brake shoes symmetrically disposed on opposite sides of the disc or wheel of the railway vehicle.

### Description of the prior art

In railway applications, disc brakes are widespread of the type comprising two brake shoes that act on opposite radial surfaces of a disc or a wheel of the railway vehicle, actuated by two levers symmetrically arranged with respect to the plane of the wheel or disc, wherein the levers are actuated by a brake actuator including at least one piston movable along a longitudinal direction.

Brake actuators are also known in which the braking force is applied to the levers bearing the brake shoes by means of two slack adjusters symmetrically disposed relative to the direction of movement of the braking piston. The slack adjusters have the object of maintaining a constant distance between the brake pads and the wheel or disc, regardless of the wear of the brake pads.

An example of a brake actuator of this type is described in WO2008/015569. This document describes a brake actuator comprising a braking piston movable along a longitudinal direction and which actuates two thrust elements movable along a transverse direction with respect to said longitudinal direction. The brake actuator actuates the thrust elements by means of two slack adjusters arranged symmetrically with respect to the longitudinal axis. The braking force is transferred from the braking piston to the thrust elements by a force multiplier mechanism. In the example illustrated in Figures 4A, 4B and 5 of WO2008/015569, the force multiplier mechanism comprises a wedge movable along said longitudinal direction and cooperating with two carriages movable along said transverse direction.

### Object and summary of the invention

The present invention aims to provide a brake actuator for railway vehicles that is very compact and that has a large multiplier ratio of the braking force. Another object of the present invention is to provide a mechanism for multiplying the braking force that allows asymmetrical strokes of the carriages located on opposite sides of the main axis.

According to the present invention, these objects are achieved by a brake actuator having the characteristics forming the subject of claim 1.

The claims form an integral part of the disclosure provided here in relation to the invention.

### Brief description of the drawings

The present invention will now be described in detail with reference to the attached drawings, given purely by way of non-limiting example, wherein:
- Figure 1 is an axial section of a disc brake for railway vehicles according to the present invention,
- Figure 2 is a detail on an enlarged scale of the part indicated by the arrow II in Figure 1,
- Figure 3 is a cross-section along the line III-III of Figure 2,
- Figure 4 is a cross-section along the line IV-IV of Figure 1,
- Figure 5 is a detail on an enlarged scale of the part indicated by the arrow V in Figure 4, and
- Figure 6 is a detail of the part indicated by the arrow VI in Figure 1 during application of the braking force.

### Detailed description

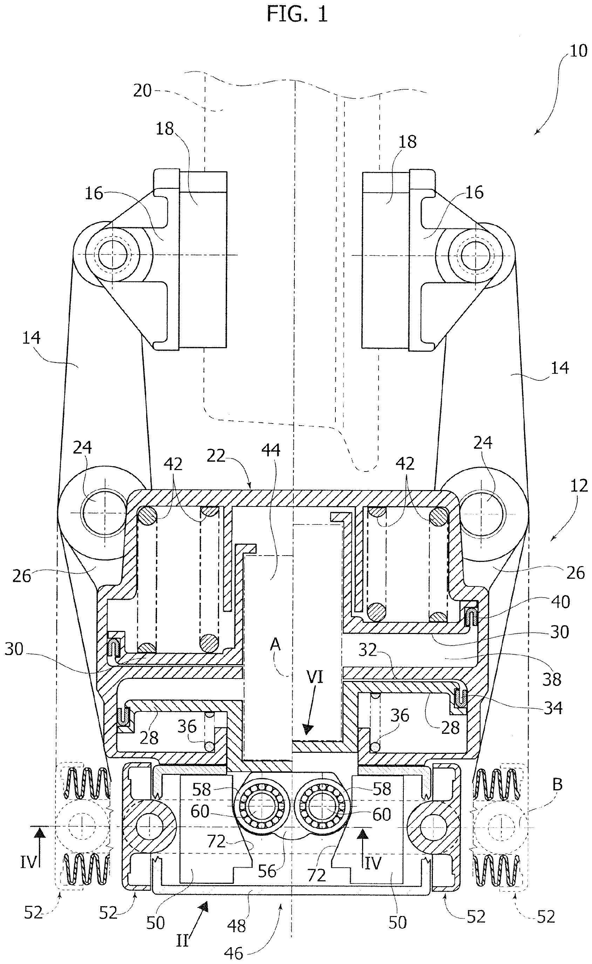

In Figure 1, a disc brake assembly for railway vehicles is indicated by 10. The disc brake assembly 10 comprises a brake actuator 12, which actuates two levers 14 that bear respective brake shoes 16 provided with respective brake pads 18. The brake pads 18 act on opposite radial surfaces of a wheel 20 of a railway vehicle. The disc brake assembly 10 can also be applied to a separate disc with respect to the wheel 20, for example, mounted on the wheel axis or projecting cantilevered outwardly from the wheel 20.

The brake actuator 12 comprises a main body 22 having two ears 26 that carry two pins 24 on which the levers 14 are articulated.

In the embodiment illustrated in Figure 1, the brake actuator 12 comprises a service braking piston 28 and a parking brake piston 30, movable within the main body 22 along a longitudinal axis A. In an alternative embodiment, not illustrated, the brake actuator 12 only has the service braking piston 28. In this case, the main body 22 would be devoid of the part in which the parking braking piston 30 is housed.

The service braking piston 28 is housed in a braking chamber 32 connected to a source of pressurized fluid. A seal 34 establishes a sealing contact between the service braking piston 28 and the side wall of the braking chamber 32. A return spring 36 pushes the service braking piston 28 towards a brake release position.

The parking braking piston 30, if present, is housed in a brake release chamber 38, and is provided with a seal 40. Compression springs 42 apply the parking braking force to the parking braking piston 30. A transmission element 44 transmits the parking braking force from the parking braking piston 30 to the service braking piston 28. A fluid pressure in the brake release chamber 38 pushes the parking braking piston 30 towards a brake release position. In the absence of pressure in the brake release chamber 38, the parking braking piston 30 moves into the parking braking position under the action of the springs 42. In Figure 1, the left side of the axis A illustrates the parking braking piston 30 in the braking position and the right side of the axis A shows the parking braking piston 30 in the brake release position.

The brake actuator 12 comprises a transmission mechanism 46 which transmits the braking force to the levers 14. The transmission mechanism 46 comprises an auxiliary body 48 fixed to the main body 22. The auxiliary body 48 extends along a transverse axis B perpendicular to the longitudinal axis A. The transmission mechanism 46 comprises two carriages 50 guided within the auxiliary body 48 along the transverse axis B and located on opposite sides with respect to the longitudinal axis A. The two carriages 50 are connected to respective thrust elements 52 in the manner described below. Each thrust head 52 is articulated to a respective lever 14.

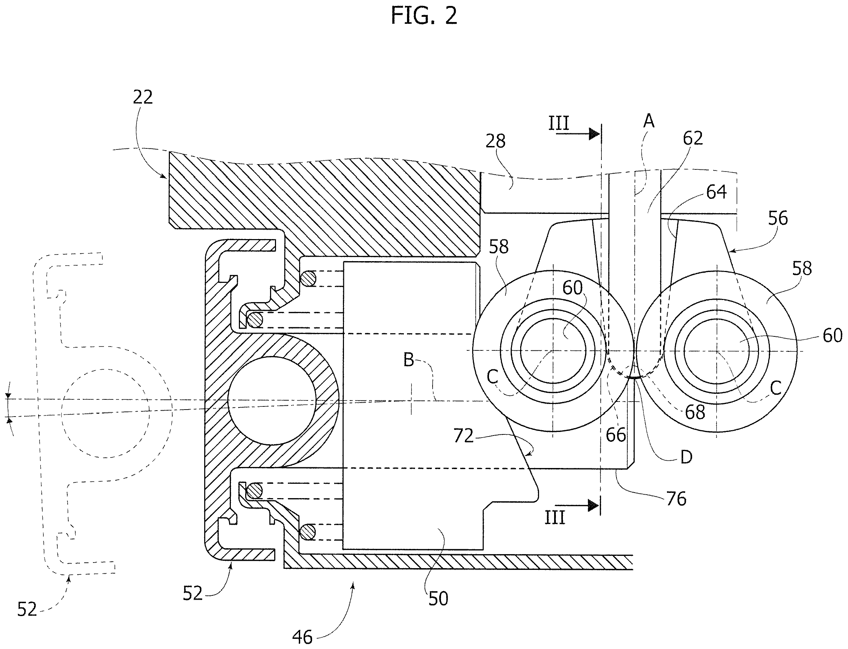

With reference to Figures 2, 3 and 4, the transmission mechanism 46 comprises a floating member 56 which carries two pairs of thrust bearings 58 freely rotatable with respect to the floating body 56 about two axes C perpendicular with respect to the longitudinal axis A and with respect to the transverse axis B. The thrust bearings 58 are mounted on respective pins 60 fixed to the floating member 56.

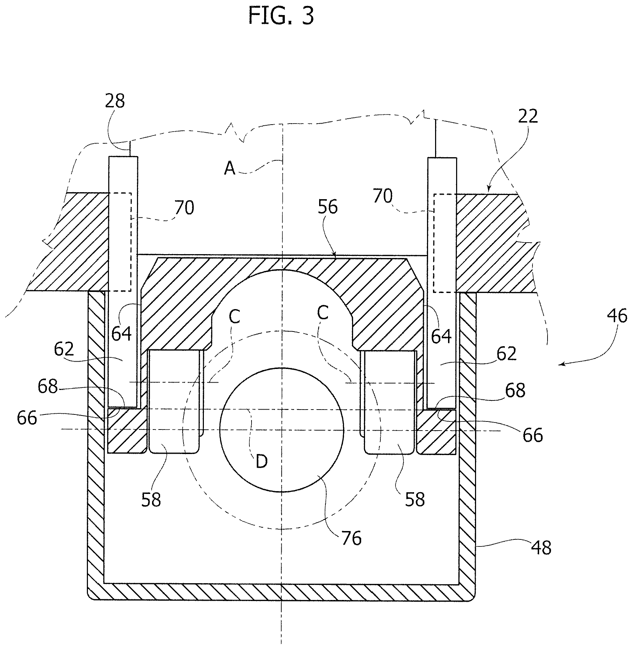

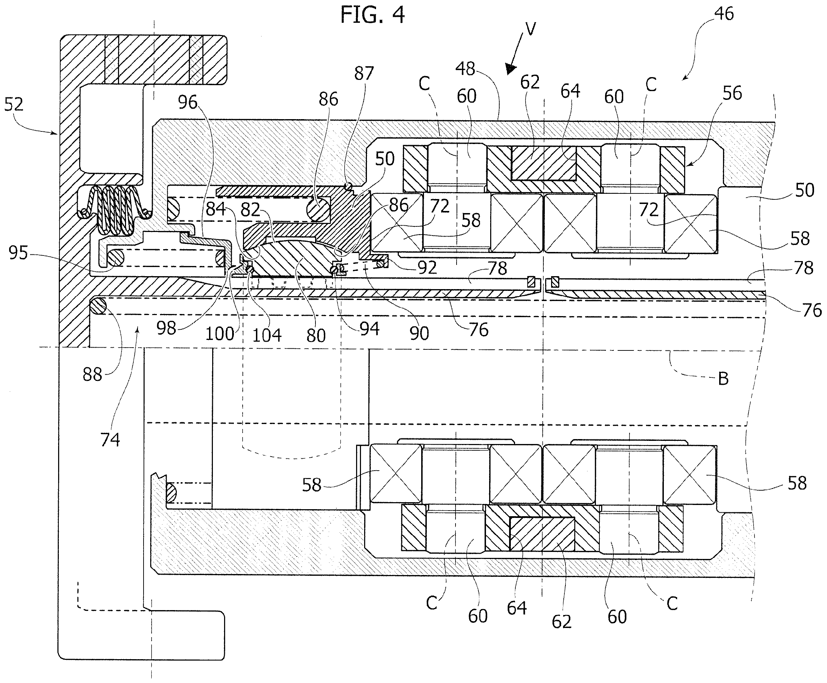

The service braking piston 28 bears two struts 62 that are fixed with respect to the service braking piston 28 and which engage respective V-shaped seats 64 formed in the floating member 56. The struts 62 and the respective seats 64 have respective cylindrical ends 66, 68 in contact with each other. The floating member 56 is free to pivot with respect to the struts 62 about an axis D perpendicular to the longitudinal axis A and to the transverse axis B. The axis D is defined by the intersection between the cylindrical ends 66, 68 and a plane passing through the longitudinal axis A and perpendicular to the transverse axis B. The axis D is the axis along which the braking force is applied by the service braking piston 28 to the floating member 56. With reference to Figure 2, according to a characteristic of the present invention, the thrust axis D is located lower than the axes C of the thrust bearings 58, with reference to the direction of application of the force. With reference to Figures 3 and 4, the two struts 62 and the two seats 64 are adjacent to respective side walls of the auxiliary body 48. As can be seen in Figure 3, the struts 62 engage respective longitudinal guides 70 formed in the main body 22, which prevent a rotation of the struts 62 about the axis A.

With reference to Figures 1, 2, 4 and 6, the thrust rollers 58 cooperate with respective cam surfaces 72 of the carriages 50. Each cam surface 72 has a straight upper portion parallel to the axis A, an intermediate portion with an arched shape with a radius equal to the outer radius of the thrust bearings 58 and a wedge-shaped lower portion.

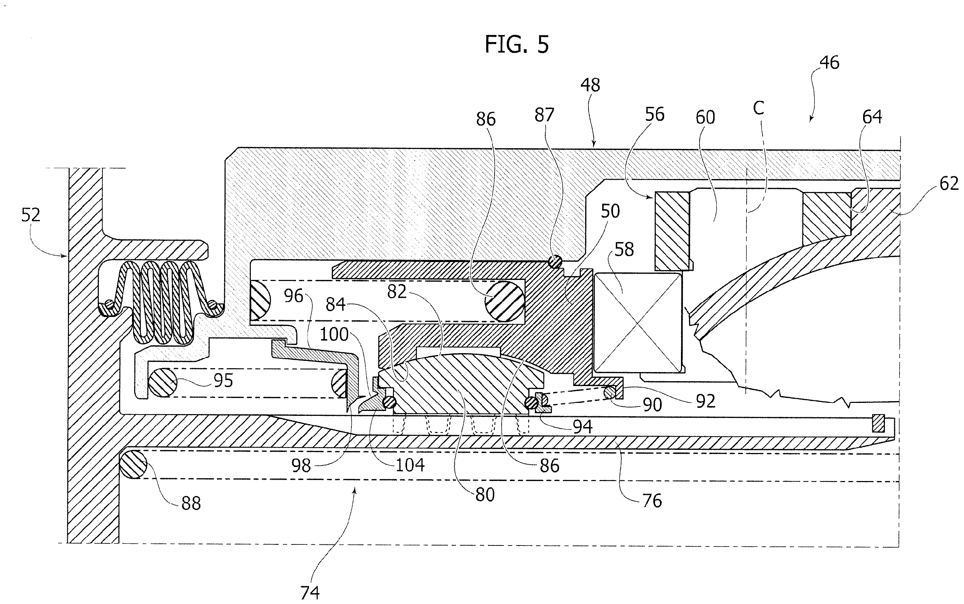

With reference to Figures 4 and 5, the carriages 50 are connected to the respective thrust elements 52 by means of respective slack adjusters 74. Each slack adjuster 74 comprises a nut screw 80 with a spherical outer surface 82 and a female thread. Each of the two thrust elements 52 of the transmission mechanism 46 comprises a threaded tubular portion 76, which extends in a transverse direction. The tubular portion 76 has an outer thread 78, for example, with trapezoidal profiled threads and multiple starts (for example four starts). The thread 78 of each tubular portion 76 is engaged with reversible coupling by the thread of the nut screw 80. Each carriage 50 has a first spherical surface 84 and a second spherical surface 86 with radii equal to the radius of the spherical surface 82 of the nut screw 80.

With reference to Figure 5, the slack adjuster 74 comprises a series of compression springs that act on the carriages 50, on the thrust elements 52 and on the nut screws 80. All the springs of the slack adjusters 74 generate direct elastic forces along the transverse axis B. A first spring 86 is arranged between the auxiliary body 48 and a respective carriage 50, and pushes the carriage 50 against the respective pair of thrust bearings 58. A stop 87, which is fixed with respect to the auxiliary body 48, forms a stroke end for the carriage 50 under the thrust of the first spring 86. A second spring 88 is arranged between the two thrust elements 52, within the two tubular portions 76 and tends to push the two thrust elements 52 outwardly from the auxiliary body 48. A third spring 90 is arranged between a support 92 fixed to a respective carriage 50 and a first thrust bearing 94 that rests on an inner side of the nut screw 80. A fourth spring 95 is arranged between the auxiliary body 48 and a second support 96, which is movable outwardly in the direction of the axis B against the action of the spring 95. The second support 96 has a spherical surface 98 that faces, with a clearance in the direction of the axis B, a corresponding spherical surface 100 of a ring of a second thrust bearing 104 that rests on an outer surface of the nut screw 80.

The operation of the brake actuator 12 according to the present invention is as follows.

Figure 1 shows the condition in which there is no fluid pressure in the braking chamber 32 and, instead, there is fluid pressure in the brake release chamber 38. The fluid pressure in the brake release chamber 38 pushes the parking braking piston 30 upwards - in Figure 1 - into the brake release position. The return spring 36 pushes the service braking piston 32 upwards into the brake release position.

In this operating condition, the first springs 86 push the carriages 50 towards each other, i.e. towards the center of the auxiliary body 48. The cam surfaces 72 of the carriages 50 act on the thrust bearings 58 and push the floating member 56 upwards. The first spherical surfaces 84 of the carriages 50 are pressed against the respective spherical surfaces 82 of the nut screws 80 and prevent the nut screws 80 from rotating about the axis B. The nut screws 80 are engaged with the corresponding threaded portions 78 of the respective thrust elements 52. Then, the carriages 50 push the respective thrust elements 52 towards the center of the auxiliary body 48.

Starting from this condition, the service braking is controlled by connecting the braking chamber 32 of the brake actuator 12 to a source of pressurized fluid. The pressurized fluid in the braking chamber 32 generates the braking force that moves the service braking piston 28 downwards.

The service braking piston 28 engages the floating organ 56 by means of the two struts 62 that engage the respective V-shaped seats 64 of the floating member 56. Then, the downward movement of the service braking piston 28 applies the braking force to the floating member 56 by means of the contact between the cylindrical ends 66, 68 of the struts 62 and the seats 64. The floating member 56 is, therefore, pushed downwards by the service braking force coming from the service braking piston 28. The thrust bearings 58 press against the cam surfaces 72 of the carriages 50 and push the carriages 50 outwards of the casing 48 in the transverse direction B.

With reference to Figures 4 and 5, the outwards thrust on the carriages 50 disengages the first spherical surfaces 84 of the carriages 50 from the spherical surfaces 82 of the nut screws 80, and brings the second spherical surfaces 86 of the carriages 50 into contact with the spherical surfaces 82 of the nut screws 80. During the movement of the carriages 50 outwards, there is a moment in which the nut screws 80 are disengaged from the first and second spherical surfaces 84, 86 of the carriages 50. At this moment, the nut screws 80 are free to rotate about the axis B. The thrust elements 52, under the action of the spring 88, move outwardly and perform an adjustment stroke of the slack, until the pads 18 are in contact with the respective braking surfaces of the wheel 20 or of the disc. This movement of slack adjustment is allowed by the fact that the nut screws 80 are free to rotate about the axis B. Continuing the outward stroke of the carriages 50, the second spherical surfaces 86 of the carriages 50 engage the respective spherical surfaces 82 of the nut screws 80. At this point, the friction between the second spherical surfaces 86 of the carriages 50 and the spherical surfaces 82 of the nut screws 80 prevents rotation of the nut screws 80 about the axis B. The outward movement of the carriages 50 transfers the braking force to the thrust elements 52 through the nut screws 80 and the threaded portion 78.

At the moment in which the nut screws 80 are disengaged from the first and second spherical surfaces 84, 86 of the carriages 50, the nut screws 80 are held axially by the forces of the springs 90, 95 acting on the thrust bearings 94, 104.

When the second spherical surfaces 86 of the carriages 50 engage the spherical surfaces 82 of the nut screws 80, the nut screws 80 move outwardly in the direction of the axis B, together with the carriages 50. The outward movement of the carriages 50 and of the nut screws 80 compresses the springs 86 and 95.

In resting conditions, i.e. in the absence of any braking force, the thrust bearings 58 are engaged in the cylindrical portions of the cam surfaces 72, which have a radius equal to the radius of the thrust bearings 58. As soon as the floating member 56 moves downwards under the action of the braking force, the thrust rollers 58 disengage from the cylindrical portions of the cam surfaces 72 and engage the respective inclined portions. The disengagement of the thrust rollers 58 from the cylindrical surfaces of the cam surfaces 72 makes the movement of the carriages 50 particularly rapid during the initial step of the outward stroke, and improves the compactness of the body of the brake actuator 12.

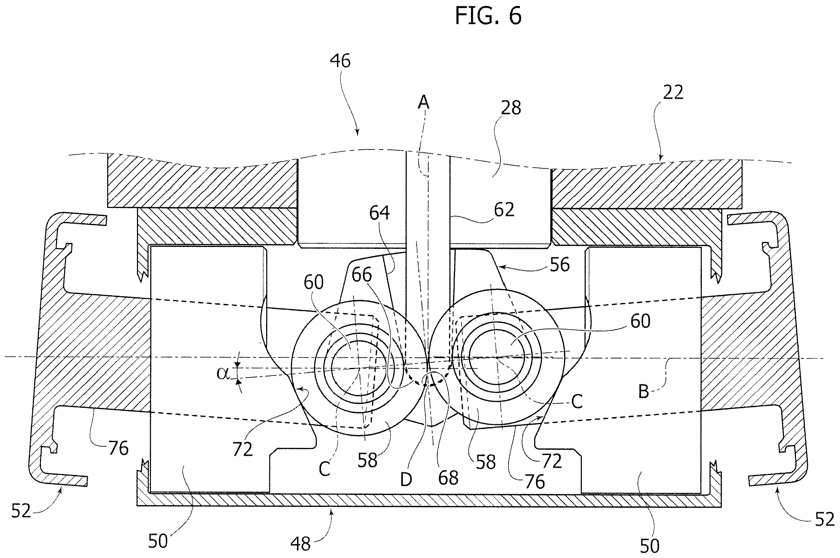

With reference to Figure 6, during application of the braking force, the floating member 56 is free to pivot about the axis D. In Figure 6, the floating member 56 is illustrated in a position rotated by an angle α with respect to a resting position. The pivoting of the floating member 56 about the axis D multiplies the stroke of the carriage 50 on the most yielding side. The multiplication of the carriage stroke located on the most yielding side is further increased by the fact that the axis D, about which the floating body 56 pivots, is located lower than the rotation axes C of the thrust bearings 58. The fact that the axis D is located lower than the rotation axes C of the thrust bearings 58 also increases the stability of the force transmission.

Of course, without prejudice to the principle of the invention, the details of construction and the embodiments can be widely varied with respect to those described and illustrated, without thereby departing from the scope of the invention as defined by the claims that follow.

## Claims

1. A brake actuator for railway vehicles, comprising:
- a main body (22) having a braking chamber (32),
- a service braking piston (28) movable with respect to the main body (22) along a longitudinal axis (A),
- a pair of levers (14) articulated to the main body (22) and bearing respective brake pads (18),
- a transmission mechanism (46) including an auxiliary body (48), a pair of thrust elements (52) articulated to said levers (14), a pair of carriages (50) movable with respect to the auxiliary body (48) along a transverse direction (B) perpendicular to said longitudinal axis (A), and a pair of slack adjusters (74) each of which is disposed between a respective carriage (50) and a respective thrust element (52),
**characterized in that** the transmission mechanism (46) comprises a floating member (56), which is free to pivot with respect to the service braking piston (28) about an axis (D) perpendicular to said longitudinal axis (A) and to said transverse axis (B), wherein the floating member (56) carries a first and a second pair of thrust bearings (58) that cooperate with cam surfaces (72) of said carriages (50).

2. A brake actuator according to claim 1, **characterized in that** it comprises a pair of thrust struts (62) that are fixed with respect to said service braking piston (28) and engaging respective V-shaped seats (64) of the floating body (56).

3. A brake actuator according to claim 2, **characterized in that** said main body (22) comprises a pair of longitudinal guides (70) engaged by said thrust struts (62).

4. A brake actuator according to claim 2, **characterized in that** said thrust struts (62) and said seats (64) have respective cylindrical ends (66, 68) in contact with each other along an axis (D) perpendicular to said longitudinal axis (A) and to said transverse axis (B).

5. A brake actuator according to claim 4, **characterized in that** said axis (D) is shifted downwardly with respect to the rotation axes (C) of said thrust rollers (58) with reference to the direction of the braking force.

6. A brake actuator according to claim 1, **characterized in that** said cam surfaces (72) each comprise a cylindrical portion with a radius equal to the radius of curvature of said thrust rollers (58) adjacent to an inclined portion.

7. A brake actuator according to claim 1, **characterized in that** each of said slack adjusters (74) comprises a nut screw (80) that engages a threaded portion (78) of a respective thrust element (52), said nut screw (80) having a spherical surface (82) which cooperates with a first spherical surface (84) and a second spherical surface (86) of a respective carriage (50) .

8. A brake actuator according to claim 7, **characterized in that** each of said nut screws (80) is compressed axially between two springs (90, 95) acting on respective thrust bearings (94, 104).

9. A brake actuator according to claim 1, **characterized in that** said thrust elements (52) cooperate with a single spring (88) tending to push said thrust elements (52) outwardly.

## Patentansprüche

1. Bremsaktuator für Schienenfahrzeuge, umfassend:
- einen Hauptkörper (22) mit einer Bremskammer (32),
- einen Betriebsbremskolben (28), der in Bezug auf den Hauptkörper (22) entlang einer Längsachse (A) bewegbar ist,
- ein Paar Hebel (14), die an dem Hauptkörper (22) angelenkt sind und jeweilige Bremsbacken (18) tragen,
- einen Getriebemechanismus (46), der einen Hilfskörper (48), ein Paar an den Hebeln (14) angelenkte Druckelemente (52), ein Paar Schlitten (50), die in Bezug auf den Hilfskörper (48) entlang einer senkrecht zu der Längsachse (A) verlaufenden Querrichtung (B) bewegbar sind, und ein Paar Gestängesteller (74) beinhaltet, die jeweils zwischen einem jeweiligen Schlitten (50) und einem jeweiligen Druckelement (52) angeordnet sind,
**dadurch gekennzeichnet, dass** der Getriebemechanismus (46) ein Schwimmelement (56) umfasst, das in Bezug auf den Betriebsbremskolben (28) um eine senkrecht zu der Längsachse (A) und zu der Querachse (B) verlaufende Achse (D) frei schwenken kann, wobei das Schwimmelement (56) ein erstes und ein zweites Paar Drucklager (58) trägt, die mit Nockenflächen (72) der Schlitten (50) zusammenwirken.

2. Bremsaktuator nach Anspruch 1, **dadurch gekennzeichnet, dass** er ein Paar Druckstreben (62) umfasst, die in Bezug auf den Betriebsbremskolben (28) fixiert sind und in jeweilige V-förmige Sitze (64) des Schwimmkörpers (56) eingreifen.

3. Bremsaktuator nach Anspruch 2, **dadurch gekennzeichnet, dass** der Hauptkörper (22) ein Paar Längsführungen (70) umfasst, in welche die Druckstreben (62) eingreifen.

4. Bremsaktuator nach Anspruch 2, **dadurch gekennzeichnet, dass** die Druckstreben (62) und die Sitze (64) jeweilige zylindrische Enden (66, 68) aufweisen, die entlang einer senkrecht zu der Längsachse (A) und zu der Querachse (B) verlaufenden Achse (D) miteinander in Kontakt stehen.

5. Bremsaktuator nach Anspruch 4, **dadurch gekennzeichnet, dass** die Achse (D) in Bezug auf die Drehachsen (C) der Druckrollen (58) in Bezug auf die Richtung der Bremskraft nach unten verschoben ist.

6. Bremsaktuator nach Anspruch 1, **dadurch gekennzeichnet, dass** die Nockenflächen (72) angrenzend an einen geneigten Abschnitt jeweils einen zylindrischen Abschnitt mit einem Radius umfassen, der gleich dem Krümmungsradius der Druckrollen (58) ist.

7. Bremsaktuator nach Anspruch 1, **dadurch gekennzeichnet, dass** jeder der Gestängesteller (74) eine Mutternschraube (80) umfasst, die mit einem Gewindeabschnitt (78) eines jeweiligen Druckelements (52) in Eingriff steht, wobei die Mutternschraube (80) eine sphärische Fläche (82) aufweist, die mit einer ersten sphärischen Fläche (84) und einer zweiten sphärischen Fläche (86) eines jeweiligen Schlittens (50) zusammenwirkt.

8. Bremsaktuator nach Anspruch 7, **dadurch gekennzeichnet, dass** jede der Mutternschrauben (80) axial zwischen zwei Federn (90, 95) zusammengedrückt wird, die auf jeweilige Drucklager (94, 104) wirken.

9. Bremsaktuator nach Anspruch 1, **dadurch gekennzeichnet, dass** die Druckelemente (52) mit einer einzelnen Feder (88) zusammenwirken, die dazu neigt, die Druckelemente (52) nach außen zu schieben.

## Revendications

1. Actionneur de frein pour véhicules ferroviaires, comprenant :
- un corps principal (22) ayant une chambre de freinage (32),
- un piston de freinage de service (28) mobile par rapport au corps principal (22) le long d'un axe longitudinal (A),
- une paire de leviers (14) articulés sur le corps principal (22) et supportant des plaquettes de frein respectives (18),
- un mécanisme de transmission (46) comportant un corps auxiliaire (48), une paire d'éléments de poussée (52) articulés sur lesdits leviers (14), une paire de chariots (50) mobiles par rapport au corps auxiliaire (48) le long d'une direction transversale (B) perpendiculaire audit axe longitudinal (A), et une paire de régleurs de jeu (74) dont chacun est disposé entre un chariot respectif (50) et un élément de poussée respectif (52),
**caractérisé en ce que** le mécanisme de transmission (46) comprend un élément flottant (56), qui est libre de pivoter par rapport au piston de freinage de service (28) autour d'un axe (D) perpendiculaire audit axe longitudinal (A) et audit axe transversal (B), dans lequel l'élément flottant (56) porte une première et une deuxième paire de paliers de butée (58) qui coopèrent avec les surfaces de came (72) desdits chariots (50).

2. Actionneur de frein selon la revendication 1, **caractérisé en ce qu'**il comprend une paire d'entretoises de poussée (62) qui sont fixées par rapport audit piston de freinage de service (28) et s'engageant avec des sièges respectifs en forme de V (64) du corps flottant (56).

3. Actionneur de frein selon la revendication 2, **caractérisé en ce que** ledit corps principal (22) comprend une paire de guides longitudinaux (70) engagés par lesdites entretoises de poussée (62).

4. Actionneur de frein selon la revendication 2, **caractérisé en ce que** lesdites entretoises de poussée (62) et lesdits sièges (64) ont des extrémités cylindriques respectives (66, 68) en contact l'une avec l'autre le long d'un axe (D) perpendiculaire audit axe longitudinal (A) et audit axe transversal (B).

5. Actionneur de frein selon la revendication 4, **caractérisé en ce que** ledit axe (D) est décalé vers le bas par rapport aux axes de rotation (C) desdits rouleaux de poussée (58) en référence à la direction de la force de freinage.

6. Actionneur de frein selon la revendication 1, **caractérisé en ce que** lesdites surfaces de came (72) comprennent chacune une partie cylindrique ayant un rayon égal au rayon de courbure desdits rouleaux de poussée (58) adjacente à une partie inclinée.

7. Actionneur de frein selon la revendication 1, **caractérisé en ce que** chacun desdits régleurs de jeu (74) comprend une vis à écrou (80) qui s'engage avec une partie filetée (78) d'un élément de poussée respectif (52), ladite vis à écrou (80) ayant une surface sphérique (82) qui coopère avec une première surface sphérique (84) et une deuxième surface sphérique (86) d'un chariot respectif (50).

8. Actionneur de frein selon la revendication 7, **caractérisé en ce que** chacune desdites vis à écrou (80) est comprimée axialement entre deux ressorts (90, 95) agissant sur des paliers de butée respectifs (94, 104).

9. Actionneur de frein selon la revendication 1, **caractérisé en ce que** lesdits éléments de poussée (52) coopèrent avec un ressort unique (88) tendant à pousser lesdits éléments de poussée (52) vers l'extérieur.
